(19) Europäisches Patentamt
European Patent Office
Office européen des brevets

(11) EP 0 813 124 A1

(12) **EUROPEAN PATENT APPLICATION**
published in accordance with Art. 158(3) EPC

(43) Date of publication:
**17.12.1997 Bulletin 1997/51**

(21) Application number: **95941827.8**

(22) Date of filing: **20.12.1995**

(51) Int. Cl.$^6$: **G04B 19/02**, G01D 7/00, G09F 11/00

(86) International application number:
**PCT/JP95/02610**

(87) International publication number:
**WO 97/22912 (26.06.1997 Gazette 1997/27)**

(84) Designated Contracting States:
**CH DE LI**

(71) Applicant: **Kuronuma, Izuru**
**Yachiyo-shi, Chiba-ken 276 (JP)**

(72) Inventor: **Kuronuma, Ryuichi**
**deceased (JP)**

(74) Representative:
**Laufhütte, Dieter, Dr.-Ing. et al**
**Lorenz-Seidler-Gossel**
**Widenmayerstrasse 23**
**80538 München (DE)**

# (54) DISPLAY

(57) A display device of this invention comprises a center wheel ( 116, 816 ) rotated in predetermined speed. A sun gear ( 114 ) is regulated the rotation thereof, and has an external gear ( 114a ). A planetary gear ( 132 ) which has number of teeth less than that of the sun gear ( 114 ) is externally contacted with the external gear ( 114a ) of the sun gear ( 114 ), and rotatably mounted on the center wheel ( 116, 816 ). The planetary gear ( 132 ) is engaged with the sun gear ( 114 ). A display member ( 150 ) is rotated by the rotation of the planetary gear ( 132 ) and supported such that it can displace in radial direction of the planetary gear ( 132 ). The display member ( 150 ) is moved along a locus of a partially deformed cycloid curve by the rotation of the planetary gear ( 132 ).

The area for displaying by the display member ( 150 ) of the display device of this invention is wide and the display is easy to see.

FIG. 1

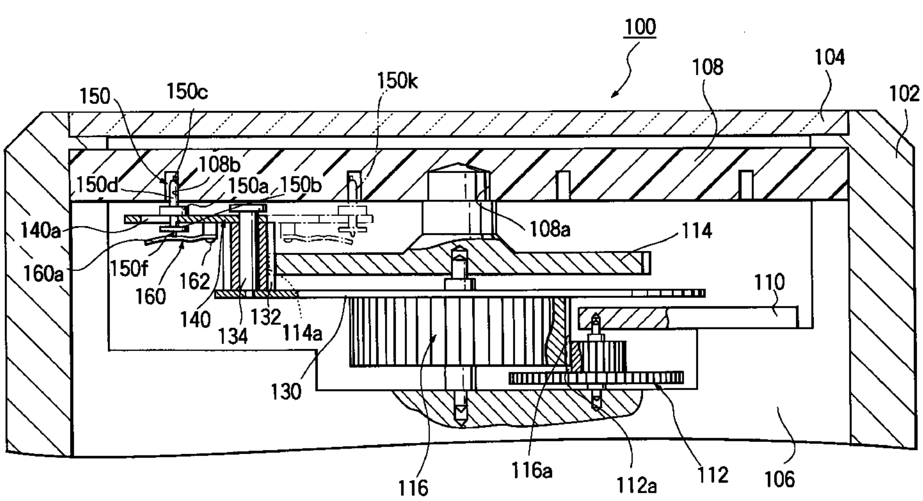


EP 0 813 124 A1

Printed by Xerox (UK) Business Services
2.15.4/3.4

## Description

BACKGROUND OF THE INVENTION

TECHNICAL FIELD

This invention relates to a display device using a movement along a locus of a partially deformed cycloid curve, and relates to, for example, a display device for displaying time.

BACKGROUND ART

A time displaying device using a movement along a locus of a cycloid curve is disclosed, for example, in Japanese Patent Laid-Open JP-A-52-117162 ( 1977 ).

In this patent, a circle 28 having a radius R2 and a center 24 revolves around the outside of a circle 26 having a radius R1 and a center 22 in the direction indicated by arrow 44, as shown in Fig. 16. The circle 28 also rotates in the direction indicated by arrow 42 to make " a rolling contact " without any slip. A point P is on the circle 34 which has a center 24 and a radius R3. In this construction, the radius R3 is greater than the radius R2. The point P rotates about the point 24 with the circle 28 having a radius R2. The point P describes a locus of a epicycloid curve 18. The locus 18 of the point P is defined by dimensioning R1, R2 and R3 with respect to each other. The locus 18 of the epicycloid curve shows the case where $2 \pi R2 = ( 2 \pi R1 ) / 12$ or $R2 = R1 / 12$. The point P travels in the direction indicated by arrows 46, 48, 50, 52, and 54 by the rotation of the circle 28.

On the other hand, a locus of a hypocycloid curve ( not shown ) is obtained in the case where a circle having a radius R2 revolves insides of a circle having a radius R1 in a rolling contact.

In the case of epicycloid curve, the rolling speed of the circle 28 in a rolling contact is supposed to be one rotation per one hour. The locus of the point P travels in one hour from the point 60, via the points 62, 64, 66, 68, and 70 to the point 72. In the case that the time is indicated by the locus of the point P, when 0 minute is indicated at the point 60, the time after 10, 20, 30, 40, 50, and 60 minutes are indicated at the points 62, 64, 66, 68, 70, and 72, respectively.

For example, when twelve O'clock is indicated at the point 60, ten minutes after twelve is indicated at the point 62. In the case of $R2 = R1 / 12$, the circle 28 in a rolling contact travels around the circumference of the circle 26 in 12 hours. Accordingly, when twelve O'clock is indicated at the point 60, one O'clock is indicated at the point 72. In a similar way, the time from one minute to 60 minutes in the respective one hour with respect to 12 hours is indicated by the locus 18 of the epicycloid curve. The principle in which time is indicated are also carried out by using the locus of the hypocycloid curve.

In the time displaying device in prior art using the locus of the cycloid curve, a planetary gear is revolved around a sun gear in a rolling contact. A locus of the cycloid curve is described by the indicating pointer integrated to the planetary gear. The time from 0 minute to 60 minutes are indicated at the positions of the indicating pointer.

However, according to the time displaying device in prior art using the locus of the cycloid curve, it is difficult to read the time displayed by the device because it is difficult to make the locus of the cycloid curve greater to some extent. To solving this problem, it is necessary to make said radius R3 larger. However, when the radius R3 is made larger to some extent, the locus of the cycloid curve is duplicated with each other and it is thus difficult to display time clearly.

Therefore, it is an object of this invention to display clearly the information with regard to time etc. , the result which can be obtained by sensing, the results which can be obtained by measuring, the information with regard to exhibiting and advertising, etc, by using the locus of a partially deformed cycloid curve.

It is further object of this invention to make sure the steady function of the display member.

It is further object of this invention to provide a display device which is new in configuration.

DISCLOSURE OF INVENTION

A display device of this invention comprises a center wheel which is rotated in predetermined speed. A sun gear having an external gear is regulated the rotation thereof. A planetary gear has number of teeth less than that of the sun gear and is externally contacted with the external gear of the sun gear , and rotatably mounted on the center wheel. The planetary gear is engaged with the sun gear. A display member is rotated by the rotation of the planetary gear. The display member is supported such that it can displace in radial direction of the planetary gear. The movement of the display member is regulated by a display regulating member in a part of a locus of a partially deformed cycloid curve. A stationary gear having an internal gear may be used instead of the sun gear for the planetary gear to be externally contacted with the the stationary gear.

In a time display device of this invention, a center wheel is rotated in one rotation per twelve hours. A planetary gear has number of teeth that is one-twelfth ( 1/12 ) of the number of teeth of the sun gear. A display member is rotated by the rotation of the planetary gear. The display member is supported such that it can displace in radial direction of the planetary gear. A display regulating member regulates the movement of the display member at least in the portion which is defined by the outside of the intersection of a locus of a partially deformed epicycloid curve including the intersection, or the inside of the intersection of a locus of a partially deformed hypocycloid curve including the intersection.

A locus of a partially deformed cycloid curve is described by the display member of the display device of this invention by rotation of the planetary gear. Because the display member can displace in radial direction of the planetary gear, the area for displaying by the display device of this invention is wide and the display is easy to see.

## BRIEF DESCRIPTION OF DRAWINGS

Fig. 1 is a partially sectional view showing first embodiment of the display device of this invention.

Fig. 2 is a partially plan view showing first embodiment of the display device of this invention in which portions of the sun gear and the planetary gear are shown with the dial removed.

Fig. 3 is a partially plan view showing first embodiment of the display device of this invention.

Fig. 4 is a block diagram of first and fourth embodiments of the display device of this invention.

Fig. 5 is a schematic illustration showing the locus of a partially deformed epicycloid curve described by the display member of first embodiment of the display device of this invention.

Fig. 6 is a partially bottom view showing a portion of the display member of second embodiment of the display device of this invention.

Fig. 7 is a partially sectional view showing third embodiment of the display device of this invention.

Fig. 8 is a schematic illustration showing the locus of a partially deformed hypocycloid curve described by the display member of third embodiment of the display device of this invention.

Fig. 9 is a partially sectional view showing fourth embodiment of the display device of this invention.

Fig. 10 is a partially plan view showing fourth and seventh embodiments of the display device of this invention.

Fig. 11 is a partially sectional view showing fifth embodiment of the display device of this invention.

Fig. 12 is a partially plan view showing fifth embodiment of the display device of this invention.

Fig. 13 is a block diagram of sixth embodiment of the display device of this invention.

Fig. 14 is a block diagram of seventh embodiment of the display device of this invention.

Fig. 15 is a block diagram of eighth embodiment of the display device of this invention.

Fig. 16 is a schematic illustration showing the locus of a partially deformed epicycloid curve described by the indicating pointer of the time display device in prior art.

## BEST MODE FOR CARRYING OUT THE INVENTION

### (1) First Embodiment

Referring to Fig. 1, a display device 100 of this invention includes a case 102. Preferably, a glass 104 is mounted on the case 102. A base plate 106 is assembled in the case 102. A dial 108 is assembled between the case 102 and the base plate 106. In this arrangement, the display device does not need to be provided with the glass 104 because the elements thereof is protected by the dial. First train wheel bridge member 110 is assembled in the base plate 106. First wheel 112 is rotatably supported by the base plate 106 and the bridge member 110. A sun gear 114 is fixed into the center hole 108a of the dial 108. The sun gear 114 is fixed to the base plate 106 and the case 102 so as not to rotate relative to them. A center wheel 116 is rotatably supported by the dial 108 and the base plate 106. The center gear 116a of the center wheel 116 engages with first pinion 112a.

A planetary gear supporting member 130 is fixed to the center wheel 116. Preferably, the planetary gear supporting member 130 is disposed between the sun gear 114 and the center gear 116a. A planetary gear 132 is rotatably assembled to the planetary gear supporting member 130 through a planetary gear pin 134. The planetary gear 132 is engaged with the sun gear portion 114a of the sun gear 114.

Referring to Figs. 1 and 2, a display supporting member 140 is fixed to the planetary gear 132. The display supporting member 140 is rotated with the planetary gear 132. The display supporting member 140 has an elongated display member guiding hole 140a for guiding a display member 150. Preferably, the longitudinal direction of the elongated hole 140a is generally conformed to the radial direction of the planetary gear 132. The length of the display supporting member 140 is the length such that the display supporting member 140 does not contact with the sun gear 114, the base plate 106, nor the other parts when it rotates with the planetary gear 132 about the planetary gear pin 134.

The display member 150 is assembled in the elongated hole 140a. The display member 150 is constructed such that it is moved along the elongated hole 140a. The display member 150 is held by means of an upper flange member 150a and a lower flange member 150b and is not separated from the display supporting member 140. A rotation indicating mark 150c for indicating the direction of rotation of the display member 150 is mounted on a top portion of the display member 150 on the side of the glass 104. Preferably, the mark 150c is made of a jewel or a plastic member.

The dial 108 has a guiding groove portion 108b which includes a side wall having a shape of a locus of a partially deformed cycloid curve. The guiding shaft portion 150d of the display member 150 is guided by the groove portion 108b. The width of the groove portion 108b is larger than the outer diameter of the shaft portion 150d. Preferably, the portion of the shaft portion 150d which contacts with the groove portion 108b has a smooth surface. Preferably, the dial 108 is made of a plastic which has low friction coefficient and the portion of the groove portion 108b which contacts with the shaft portion 150d has a smooth surface. Preferably, the shaft portion 150d is guided by the side wall of the groove portion 108b in one part of the locus of a partially deformed cycloid curve and is spaced apart from the side wall of the groove portion 108b in the other part of the locus of a partially deformed cycloid curve.

The dial 108 is made of a generally transparent material. Preferably, only the bottom portion of the groove portion 108b of the dial 108 is transparent and the portion except the bottom portion is coated with a paint which is not transparent. Another member which is not transparent may be bonded on this portion.

Further, the mark 150c may be constructed such that it is moved outside of the dial 108 by cutting off the groove portion 108b to extend the length of the shaft portion 150d. Each portion of the dial which is divided by the guiding grooves ( not shown ) may be fixed to each other in a manner of bridge in which each separated portion of the dial is bonded with each other by an adhesive, etc. such that the separated portion the dial can not contact with the mark 150c when it moves.

A display regulating member 160 is mounted on the display supporting member 140 to regulate the movement of the display member 150. Preferably, the display regulating member 160 is constructed of a leaf spring member 160a. The display regulating member 160 is mounted on the display supporting member 140 by means of a spring fixing member 162. A regulating projection portion 150f is positioned by the leaf spring member 160a in one part of the locus of a partially deformed cycloid curve. The projection portion 150f is separated from the leaf spring member 160a in the other part of the locus of a partially deformed cycloid curve and the spring force can not act upon the projection portion 150f.

Referring to Fig. 3, the groove portion 108b of the dial 108 is constructed of twelve same shaped portions which are centrosymmetry about the center hole 108a. That is, the groove portion 108b has generally same shaped portions within an angle of 30 degrees about the center hole 108a.

The display member 150 moves such that the locus described by the planetary gear in the first one rotation can not overlap with that in the next one rotation. The groove portion 108b is constructed to meet this condition. The groove portion 108b intersects at an intersection 108g. The portion of the display member 150 by which the locus of a partially deformed cycloid curve is regulated includes at least the intersection 108g and all areas outside of the intersection 108g. Because the movement of the display member 150 is regulated in the area including the intersection 108g, the display member 150 can pass through the intersection 108g without interrupting by the shape of the side wall of the groove portion 108b at the intersection 108g. After the display member 150 passes through the intersection 108g, the regulating force applied by the leaf spring member 160a is removed and the display member 150 is moved along the shape of the side wall of the groove portion 108b to describe a locus of a partially deformed cycloid curve.

The dial 108 includes hour indexes 108c from 1 to 12 which are disposed about the center circle 108a and twelve sets of minute indexes 108d. The minute indexes 108d is so shaped that the portions which are disposed within 30 degrees about the center hole 108a are generally same. Preferably, the hour indexes 108c are provided at the position shown as 1 to 12 at same intervals and the minute indexes 108d are provided at the position shown as 0, 10, 20, 30, 40, and 50. The hour indexes 108c may be provided in other arrangement, for example, at same intervals of 90 degrees. The minute indexes may be disposed in other arrangement, for example, at 0, 15, 30, and 45. Alternatively, the display device does not need to be provided with any index. Preferably, the hour indexes 108c and the minute indexes 108d are formed by printing. The hour and minute indexes 108c and 108d may be formed by molding a plastic material which has a color different from the color of the dial 108 at the same time that it is molded.

Next, the whole arrangement and function of the first embodiment will be explained.

Referring to Figs. 1 to 4, an oscillating circuit 204 is activated by a battery 200. A quartz oscillator 202 defines an oscillating source and oscillated, for example, at 32,768 Hz and outputs a reference signal to the oscillating circuit 204. A dividing circuit 206 receives the output signal of the oscillating circuit 204 to perform a predetermined dividing process and outputs, for example, a signal of 1 Hz. A driving circuit 208 receives the output signal of the dividing circuit 206 and outputs a predetermined driving signal for driving a motor. Preferably, the motor is a stepping motor.

A coil block 210 receives the predetermined driving signal for driving a motor and magnetizes a plurality of poles of a stator 212. A rotor 214 is rotated by the magnetic force of the stator 212. Preferably, the stator 212 and the rotor 214 define a 2-pole stepping motor. The rotor 214 is rotated by 180 degrees per one second in response to said 1 Hz signal. Fifth wheel 216 is rotated by the rotation of the rotor 214. Fourth wheel 218 is rotated by the rotation of the fifth wheel 216. Preferably, the fourth wheel 218 is rotated by 6 degrees per one second. The center wheel 116 is rotated by the rotation of the fourth wheel 218 via third wheel 222, second wheel 224, and first wheel 112. The center wheel 116 is rotated in the same direction as the fourth wheel 218. Preferably, the center wheel 116 is rotated one rotation per twelve hours. In this case, the number of gears defining the gear train, speed ratio between gears, and direction of rotation of gears are constructed as a variety of values and arrangement by designing suitably the rotation speed of the motor, the arrangement of the gear train etc.

Referring to Fig.2, the planetary gear supporting member 130 is rotated in the direction indicated by arrow 142 by the rotation of the center wheel 116 in the direction indicated by arrow 142. The planetary gear 132 is revolved around the sun gear 114 in the direction indicated by arrow 144 and rotated in the direction indicated by arrow 146. The display supporting member 140 fixed integrally to the planetary gear 132 is rotated in the direction indicated by arrow 148 by the rotation of the planetary gear 132.

Referring to Figs.2 and 3, the display member 150 can be displaced in a predetermined area along the shape of the elongated hole 140a. The display member 150 is guided by the groove portion 108b. The display member 150 is rotated to the position indicated by phantom line by the rotation of the planetary gear 132. The minute is displayed by means of the relative position of the mark 150c and the minute indexes 108d.

Referring to Fig.5, the radius of the stationary circle is R1. The locus displayed by the time display device in prior art utilizing a epicycloid can display is illustrated by phantom line 310. The locus displayed by the display device of this invention is illustrated by solid line 300.

The area between the radius R4 and the radius R5 can be displayed by the time display device in prior art. The area between the radius R6 and the radius R5 can be displayed by the display device of this invention. The display member 150 passes through the points 360, 362, 364, 366, 368, 370, and 372 in one hour. That is, when 0 minute in a certain hour is indicated at the point 360, the time after 10, 20, 30, 40, 50, and 60 minutes are indicated at the points 362, 364, 366, 368, 370, and 372, respectively.

The the minute indexes 108d of the dial 108 shown in Fig, 3 is provided corresponding to the points 360, 362, 364, 366, 368, 370, and 372, respectively. Twelve sets of the the minute indexes 108d is in a centrosymmetry manner about the center hole 108a. In this way,the time from 0 minute to 60 minutes relative to twelve hours is displayed by the display member 150.

The power source of the display device of this invention may be a mainspring or a weight and the arrangement for driving and transmitting may be a friction wheel, a belt, or a chain.

In the first embodiment of this invention, " hour " and " minute " are displayed at the same time by using only one display member. Further, the accuracy of guiding the planetary gear is good because the dial and the center wheel are guided by the portion of the sun gear. Moreover, the display member is guided without any trouble with the movement thereof at the intersection of the locus of the cycloid curve.

(2) Second Embodiment

Next, second embodiment of this invention will be explained.

Referring to Fig. 6, the display regulating member 164 is mounted on the display supporting member 140. Preferably, the display regulating member 160 includes a wire spring portion 164a. The display regulating member 164 is mounted on the display supporting member 140 by means of a spring fixing member 166. A spring force is applied by the spring portion 164a such that the lower flange member 150b is sandwiched between the spring portion 164a at both side. The lower flange member 150b is positioned by the spring portion 164a in one portion of the locus of a partially deformed cycloid curve. The lower flange member 150b is spaced apart from the spring portion 164a in the other portion of the locus of a partially deformed cycloid curve. The display member is rotated to the position 150m indicated by phantom line where the spring force of the display regulating member 164 is not applied.

Preferably, the display regulating member is formed of a leaf spring by which the lower flange member 150b is applied a force on the sides. Alternatively, the lower flange member 150b is made of a magnetic material and the display regulating member is formed of a magnet by which the lower flange member 150b is attracted.

A stable action of regulating can be obtained in the second embodiment of this invention.

(3) Third Embodiment

Next, third embodiment of this invention will be explained, mainly with regard to the difference between first and third embodiments.

Referring to Fig. 7, a stationary gear 814 includes a internal gear 814a. The stationary gear 814 is fixed to a base plate 806. The center wheel 816 is rotatably supported by a dial and the base plate 806. The center gear 816a of the center wheel 816 is engaged with first pinion 112a of first wheel 112. A planetary gear 832 is rotatably supported on the planetary gear supporting member 130 by means of the planetary gear pin 134. The planetary gear 832 is engaged with the internal gear 814a of the stationary gear 814. The planetary gear supporting member 130 is rotated with the center wheel 816 by the rotation of the center wheel 816. The planetary gear 832 is engaged with the internal gear 814a to revolve inside of the stationary gear 814 and to rotate. The display supporting member 140 is rotated integral with the planetary gear 832.

Referring to Fig. 8, the radius of the stationary circle is R1. The locus displayed by the time display device in prior art utilizing a hypocycloid can display is illustrated by phantom line 384. The locus displayed by the display device of this invention is illustrated by solid line 380. Only the area between the radius R7 and the radius R8 can be displayed by the time display device in prior art. The area between the radius R7 and the radius R9 can be displayed by the display device of this invention.

The minute indexes of the display device of this invention utilizing a locus of a partially deformed hypocycloid curve are provided at the position corresponding to the locus of 0, 10, 20, 30, 40, and 50, respectively, as is in the display device of this invention utilizing a locus of a partially deformed epicycloid curve.

A display device having a new configuration is provided by the the third embodiment of this invention and it is easy to see.

(4) Fourth Embodiment

Next, fourth embodiment of this invention will be explained, mainly with regard to the difference between first and fourth embodiments. The arrangement of the fourth wheel 218 and the center wheel 116 of fourth embodiment is different from that of first embodiment.

Referring to Figs. 9 and 10, in a display device 400, the sun gear 114 includes a center hole 114d. The band portion 116c of the center wheel 116 is rotatably supported by the center hole 114d. The center wheel includes a center hole 116d. The fourth wheel 218 is rotatably supported between the base plate 106 and the center wheel 116. The band portion 218a of the fourth wheel 218 is rotatably supported by the center hole 116d of the center wheel 116. The fourth wheel 218 is engaged with the fifth wheel 216 to rotate by six degrees per one second. A second hand 220 is attached to the fourth wheel 218 to indicate second. An hour hand 120 is attached to the center wheel 116 to indicate hour.

The hour indexes 108h of the dial may be disposed in the area enclosed by the respective groove portions 108b. The display device does not need to be provided with the hour hand 120.

A display device having a new configuration is provided by the fourth embodiment of this invention.

(5) Fifth Embodiment

Next, the fifth embodiment of this invention will be explained, mainly with regard to the difference between first and fifth embodiments.

Referring to Figs. 11 and 12, a planetary gear supporting member 930 is fixed to a center wheel 916. A planetary gear 932 is rotatably supported on the supporting member 930 by means of a planetary gear pin 934. The planetary gear 932 is engaged with a sun gear portion 914a of the sun gear 914. A planetary gear ring 954 is fixed to the planetary gear 932 and is rotated with the planetary gear 932 around the pin 934.

A display supporting member 940 is fixed to the ring 954. Preferably, the ring 954 is formed integrally with the planetary gear 932. Preferably, the ring 954 may be formed integrally with the display supporting member 940. That is, these three members, the planetary gear ring 954, the planetary gear 932, and the display supporting member 940 may be formed integrally. The display supporting member 940 is rotated with the planetary gear 932. The display supporting member 940 includes elongated display member guiding hole 940a.

A display member 950 is assembled in the elongated hole 940a. The display member 950 is moved along the elongated hole 940a. The display member 950 is held by means of an upper flange member 950a and a lower flange member 950b and is not separated from the display supporting member 940. A rotation indicating mark 950c is provided on a top portion of the display member 950.

A guiding lever 970 is rotatably supported on the sun gear shaft portion 914d of the sun gear 914. The lever 970 includes a cam portion 970a in which the portion close to the shaft portion 914d is relatively longer than the portion far from the shaft portion 914d. Preferably, the shape of the cam portion 970a far from the shaft portion 914d is generally circular and has a center which is the same as the center of the pin 934. The lever 970 includes an actuating hole 970b. The ring 954 is rotated within the actuating hole 970b. A force is applied by a tension spring member 972 for making the pin 934 and the display member 950 close with each other.

Preferably, the tension spring member 972 comprises a belt by which a resilient force is applied. The tension spring member 972 may be a coil spring.

The planetary gear 932 is revolved by rotation of the center wheel 916 and is rotated. The display member 950 is rotated with the planetary gear 932. The display member 950 is moved along the profile of the cam portion 970a with the lower flange member 950b pressed to the cam portion 970a. The display member 950 is rotated to the position 950k shown by phantom line. A locus of a partially deformed cycloid curve is described by the display member 950 as the first embodiment of this invention.

Preferably, the dial 908 is made of a transparent material. Alternatively, only the portion 908b ( shown by phantom line ) corresponding to the locus of the movement of the display member 950 may be transparent. If desired, indexes may be provided on the dial 908. It is not necessary to form a groove on the dial 908 for guiding the display member 950.

A display device having a display member which can be moved smoothly and steadily is provided by the fifth embodiment of this invention. The shape of the dial thereof is simple.

(5) Sixth Embodiment

Next, the sixth embodiment of this invention will be explained.

Referring to Fig. 13, an input member 502 receives a information from outside. For example, the input member 502 is comprised of a sensor. Temperature, atmospheric pressure, illumination, density of $CO_2$ , etc. are sensed to output a sensing signal with regard to the result. Alternatively, the input member 502 is comprised of a measuring instrument and number of rotation, speed, weight, length, frequency , etc. are measured to output a sensing signal with regard to the result. In the arrangement where time information is calculated to output an output signal, the display device does not need to be provided with the input member 502.

A program for processing the sensing signal is stored in a memory circuit 504. A driving circuit 506 is run by the program for processing the sensing signal in response to the result of sensing to output a predetermined driving signal. The driving circuit 506 may be provided with a calculating circuit and a comparator for processing the sensing signal and the display device does not need to be provided with the memory circuit 504.

A driving member 508 is actuated in response to the driving signal. Preferably, the driving member 508 is comprised of a motor including a electro-magnetic motor, a stepping motor, etc. The driving member 508 may be a main spring, weight, water pressure, oil pressure, etc.

A transmitting member 510 is rotated by the action of the driving member 508 in predetermined speed and direction. A center wheel 512 is rotated by the rotation of the transmitting member 510. A planetary gear 516 is engaged with a sun gear 514 and rotated by the rotation of the center wheel 512. A display supporting member 518 is rotated with the planetary gear 516. A display member 520 is moved with the display supporting member 518 and guided by a dial in a portion of the moving area. A display regulating member regulates the moving area of the display member 520. The display member 520 is moved so as to describe a locus of a partially deformed cycloid curve above mentioned. The result of sensing is displayed by the relation of the positions between the display member 520 and the indexes of the dial. The arrangement of the dial in sixth embodiment of the display device of this invention may be the same as the fourth embodiment shown in Fig. 10 except that the indexes of the dial corresponds to the kind of sensing.

A variety of the sensing and measuring results can be displayed clearly by the sixth embodiment of the display device of this invention.

(7) Seventh Embodiment

Next, seventh embodiment of this invention will be explained, mainly with regard to the difference between seventh and sixth embodiments.

Referring to Fig. 14, a drive controlling circuit 602 receives a sensing signal from an input member 502. The drive controlling circuit 602 processes the result of sensing or measuring by the program for processing the sensing signal of a memory circuit 504 to output a gear drive controlling signal. A gear driving circuit 612 outputs a gear driving signal in response to the gear drive controlling signal output by the drive controlling circuit 602. A driving member 508 is actuated in response to the gear driving signal to drive a display member 520 via a transmitting member 510 and a center wheel 512. A display lighting circuit 604 outputs a display lighting signal in response to the display driving signal output by the drive controlling circuit 602. A indicator lighting circuit 608 outputs a indicator lighting signal in response to the indicator controlling signal output by the drive controlling circuit 602.

Referring to Fig. 10, a display lighting member 520c is mounted on the top of the display member 520. The display lighting member 520c is lighted in response to the display lighting signal output by the display lighting circuit 604. Preferably, the display lighting member 520c is comprised of a light element such as LED. Preferably, the display lighting member 520c is lighted at 1 Hz to display second. Alternatively, the display lighting member 520c is lighted at more than 1 Hz, for example 5 Hz, to display that the result of sensing or measuring is greater than a reference value.

At least one of the letter index 540 or the indicating index 542 is comprised of a indicator lighting member 610. Preferably, the indicator lighting member 610 is comprised of a light element such as LED. The indicator lighting member 610 may be a fluorescent tube, an electric light, or a flashlight.

The arrangement of seventh embodiment of the display device of this invention may be applied to a time display device. In this case, the letter index is comprised of figures of 1 to 12 and only one figure corresponding to the present time is lighted. Preferably, the display lighting member 520c is lighted at 1 Hz to display second and the display device does not need to be provided with a second hand.

A display device which is visible in dark can be obtained by the seventh embodiment of the display device of this invention which can display that the sensing or measuring results is greater than a reference value.

(8) Eighth Embodiment

A multi-function display device is carried out by comprising a plurality of display device of this invention and controlling all of them by predetermined program.

Referring to Fig. 15, in a multi-function display device 700 of eighth embodiment of the display device of this invention, a plurality of input member comprising first, second, and third input member 702, 704, and 706 outputs a sensing signal to a display controlling circuit 710 in response to the result of input. Alternatively, the display controlling circuit 710 may calculate a predetermined calculation, such as time information, in response to the reference signal output by a quartz oscillator etc. without using input members.

If desired, the display device may be provided with a memory circuit 712 for storing a predetermined processing program. The display controlling circuit 710 processes predetermined process to output a result of sensing or time information to a plurality of display device comprising first, second, and third display device 720, 722 and 724. The first, second, and third display device 720, 722 and 724 display the result of sensing or time information, respectively.

A world-time timepiece, multi-functional stopwatch, and multi-timer as well as a multi-functional measuring instrument by which a plurality of measuring results are displayed can be obtained by the eighth embodiment of the display device of this invention.

INDUSTRIAL APLICABILITY

The display device of this invention is applicable to a display device for displaying time information, such as a watch, clock, a wall clock, and a clock for setting a house or building.

The display device of this invention is applicable to a sensing device using a sensor, a measuring devise using a measuring instrument, or an alarm device.

The display device of this invention is applicable to a device having a new configuration for exhibiting and advertising.

The display device of this invention is applicable to a multi-function display device for displaying a plurality of information which is constructed with simple arrangement.

## Claims

1. A display device comprising:

   a center wheel ( 116, 816 ) rotated in predetermined speed;
   a sun gear ( 114 ) or a stationary gear ( 814 ) having an external gear ( 114a ) or an internal gear ( 814a ) and being regulated the rotation thereof;
   a planetary gear ( 132, 832 ) being externally contacted with the external gear ( 114a ) of the sun gear ( 114 ) or internally contacted with the internal gear ( 814a ) of the stationary gear ( 814 ), said planetary gear ( 132, 832 ) rotatably mounted on the center wheel ( 116, 816 ) and being engaged with the sun gear ( 114 ) or the stationary gear ( 814 ) , said planetary gear ( 132, 832 ) having number of teeth less than that of the sun gear ( 114 ) or the stationary gear ( 814 ) ; and
   a display member ( 150 ) rotated by the rotation of the planetary gear ( 132, 832 ) and supported such that it can displace in radial direction of the planetary gear ( 132 ).

2. A display device comprising:

   a center wheel ( 116, 816 ) rotated by one rotation per twelve hours;
   a sun gear ( 114 ) or a stationary gear ( 814 ) having an external gear ( 114a ) or an internal gear ( 814a ) and being regulated the rotation thereof;
   a planetary gear ( 132, 832 ) being externally contacted with the external gear ( 114a ) of the sun gear ( 114 ) or internally contacted with the internal gear ( 814a ) of the stationary gear ( 814 ), said planetary gear ( 132, 832 ) rotatably mounted on the center wheel ( 116, 816 ) and being engaged with the sun gear ( 114 ) or the stationary gear ( 814 ) , said planetary gear ( 132, 832 ) having number of teeth that is one-twelfth ( 1/12 ) of the number of teeth of the sun gear ( 114 ) or the stationary gear ( 814 ) ;
   a display member ( 150 ) rotated by the rotation of the planetary gear ( 132, 832 ) and supported such that it can displace in radial direction of the planetary gear ( 132 ), said display member ( 150 ) being moved along a locus of at least a partially deformed cycloid curve; and
   a dial ( 108 ) having a index corresponding to the position of the display member ( 150 ) for displaying time information.

3. A display device claimed in claim 1 or claim 2, further comprising a display regulating member ( 160 ) for regulating the movement of the display member ( 150 ) within a predetermined area having a standard point which is defined by the intersection of said locus of at least a partially deformed cycloid curve.

FIG. 1

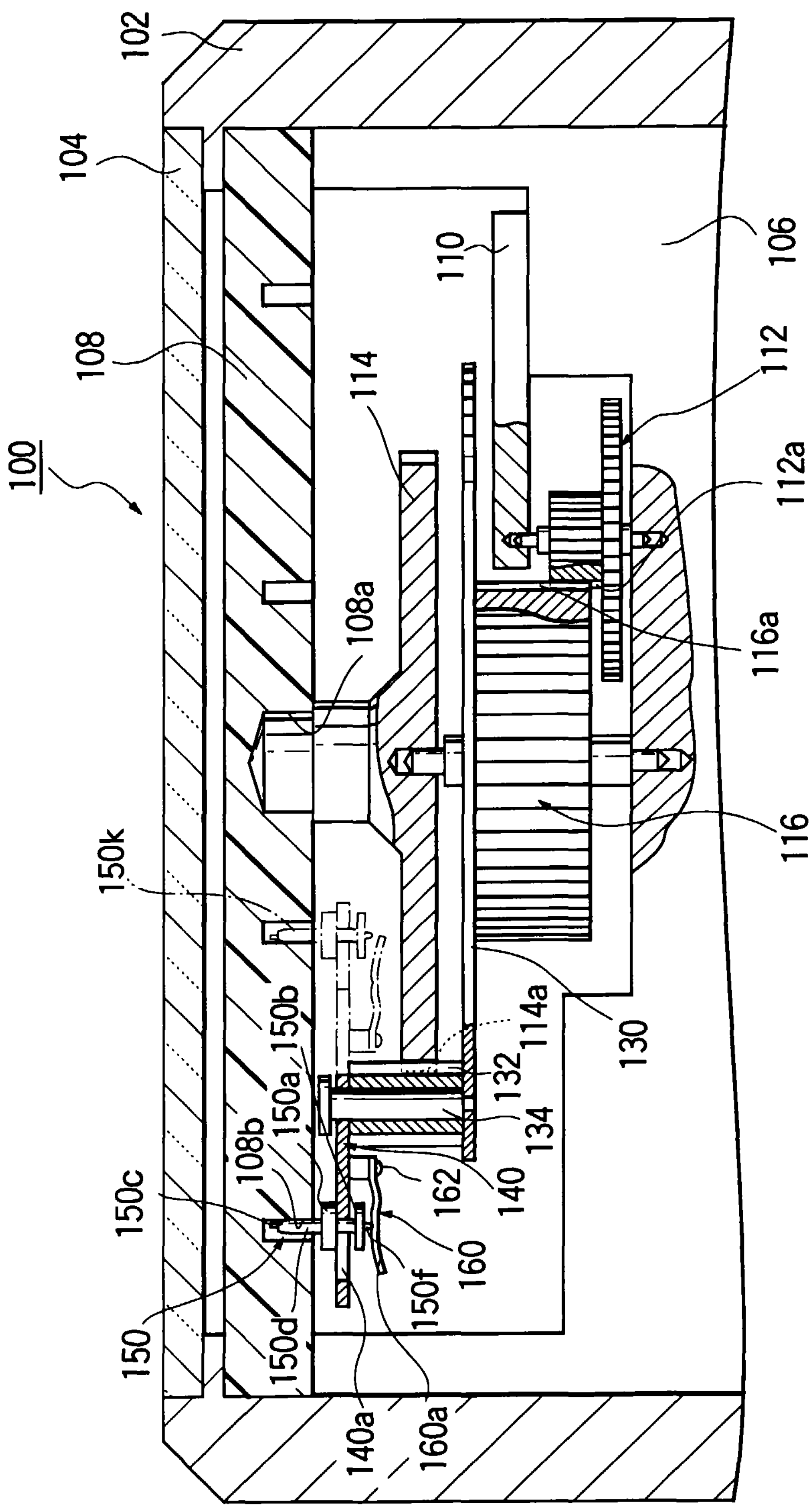
100
102
104
106
108
108a
108b
110
112
112a
114
114a
116
116a
130
132
134
140
140a
150
150a
150b
150c
150d
150f
150k
160
160a
162

FIG. 2

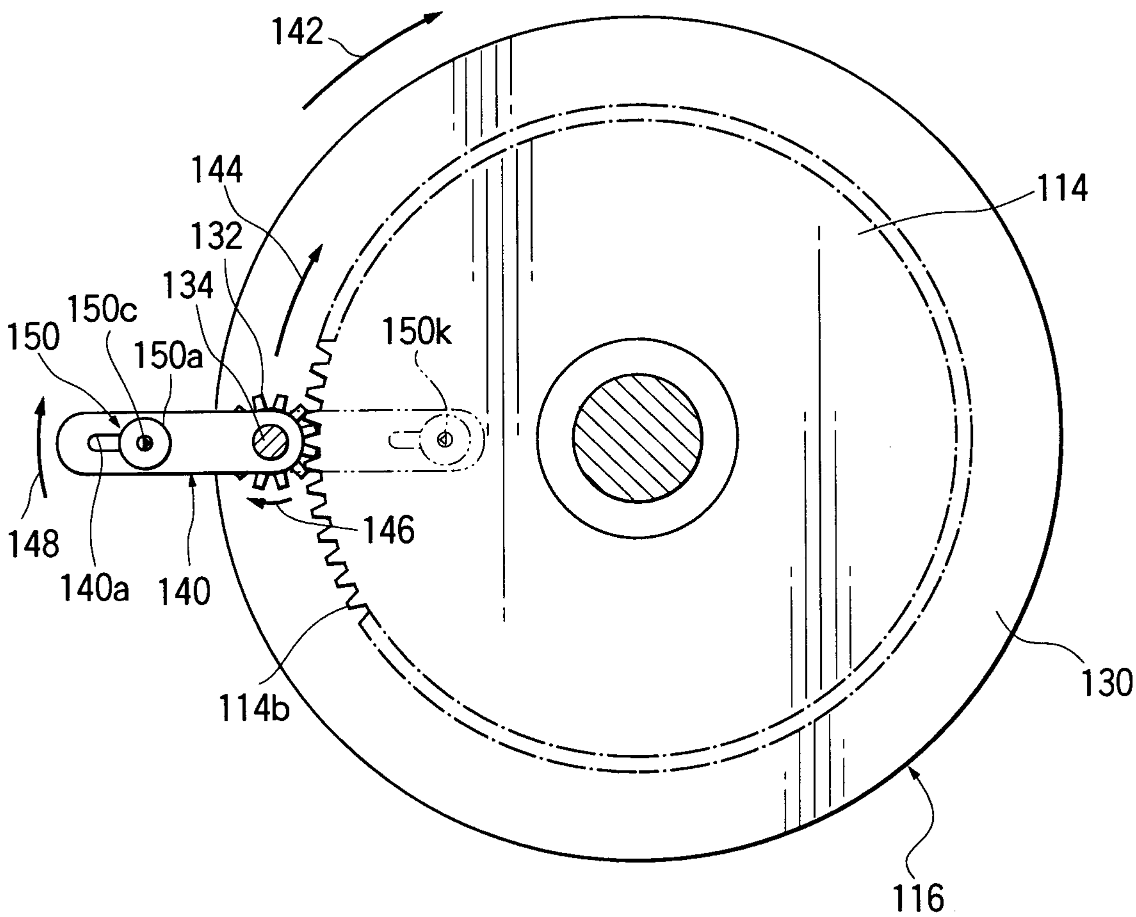
142
144
132
134
150c
150
150a
150k
114
148
146
140a
140
114b
130
116

FIG. 3

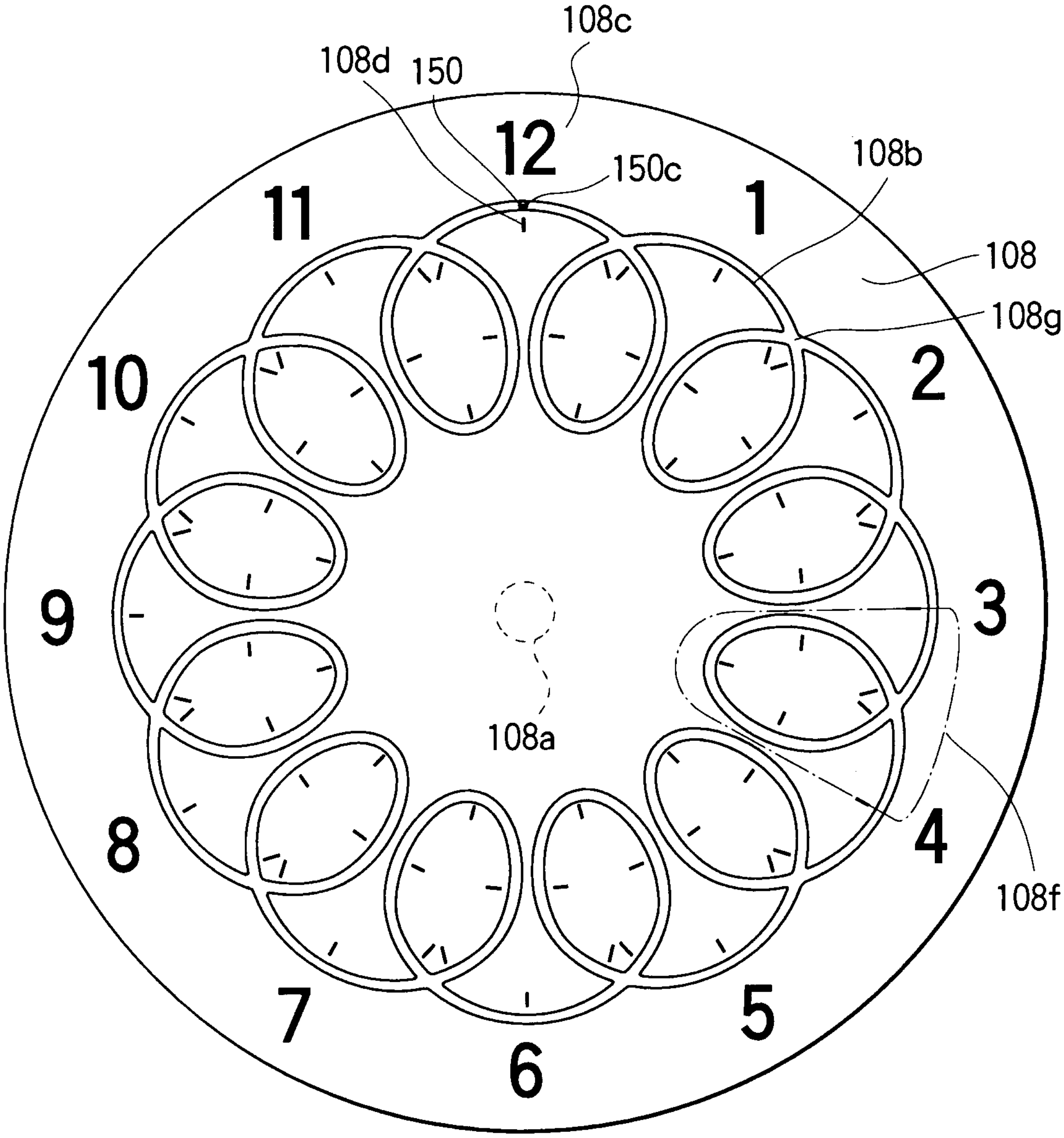

FIG. 4

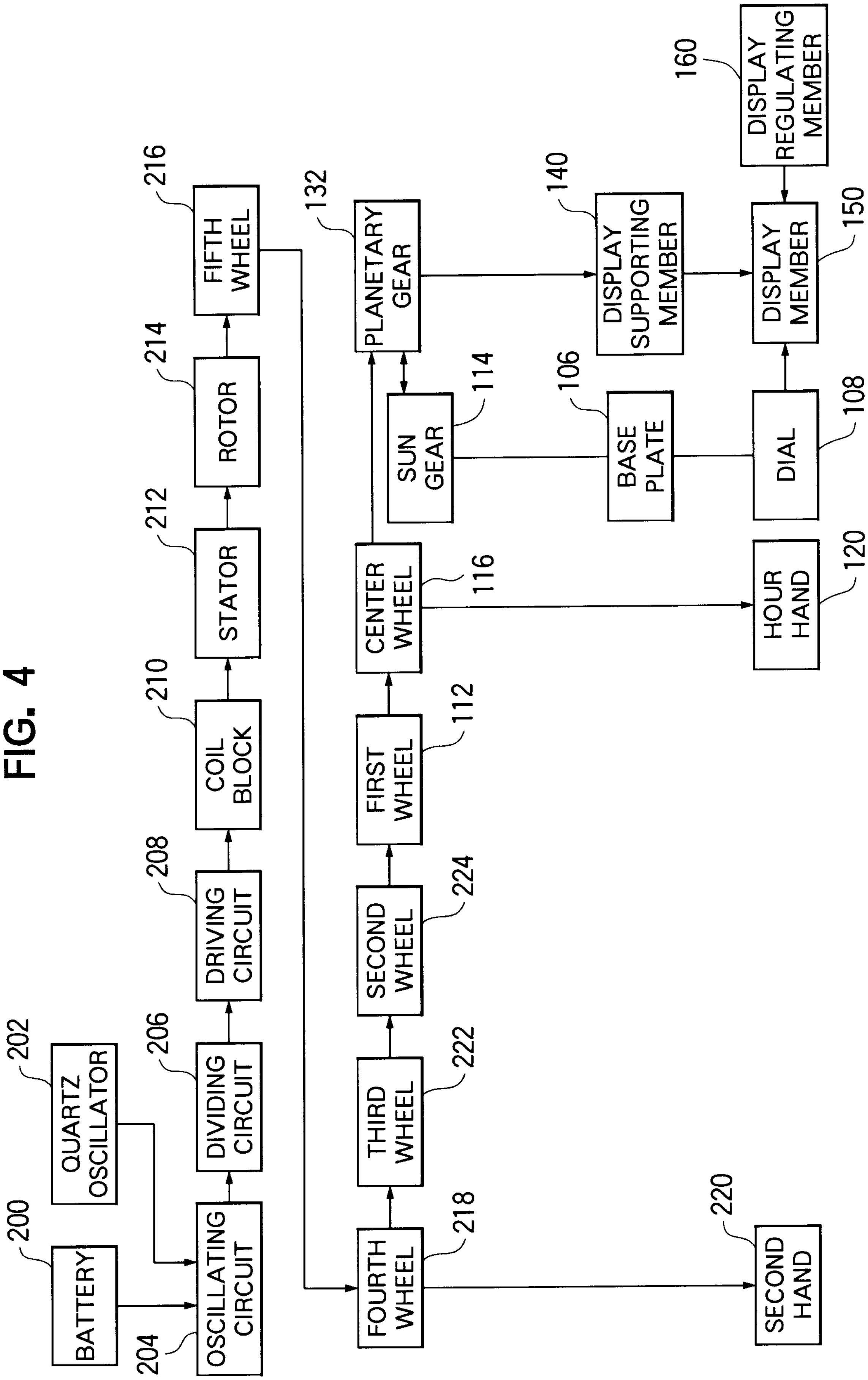
BATTERY
200
QUARTZ OSCILLATOR
202
OSCILLATING CIRCUIT
204
DIVIDING CIRCUIT
206
DRIVING CIRCUIT
208
COIL BLOCK
210
STATOR
212
ROTOR
214
FIFTH WHEEL
216
FOURTH WHEEL
218
THIRD WHEEL
222
SECOND WHEEL
224
FIRST WHEEL
112
CENTER WHEEL
116
SUN GEAR
114
PLANETARY GEAR
132
SECOND HAND
220
HOUR HAND
120
DIAL
108
BASE PLATE
106
DISPLAY SUPPORTING MEMBER
140
DISPLAY MEMBER
150
DISPLAY REGULATING MEMBER
160

FIG. 5

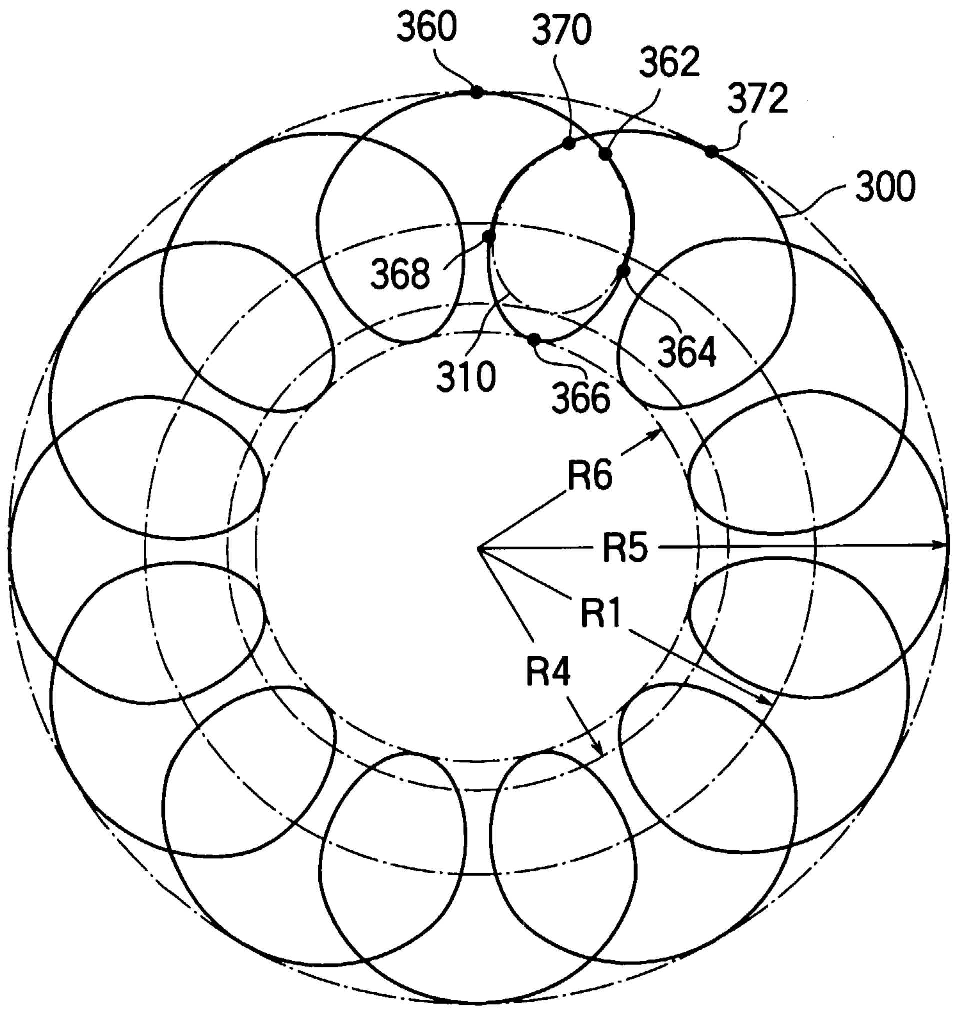
360
370
362
372
300
368
310
364
366
R6
R5
R1
R4

FIG. 6

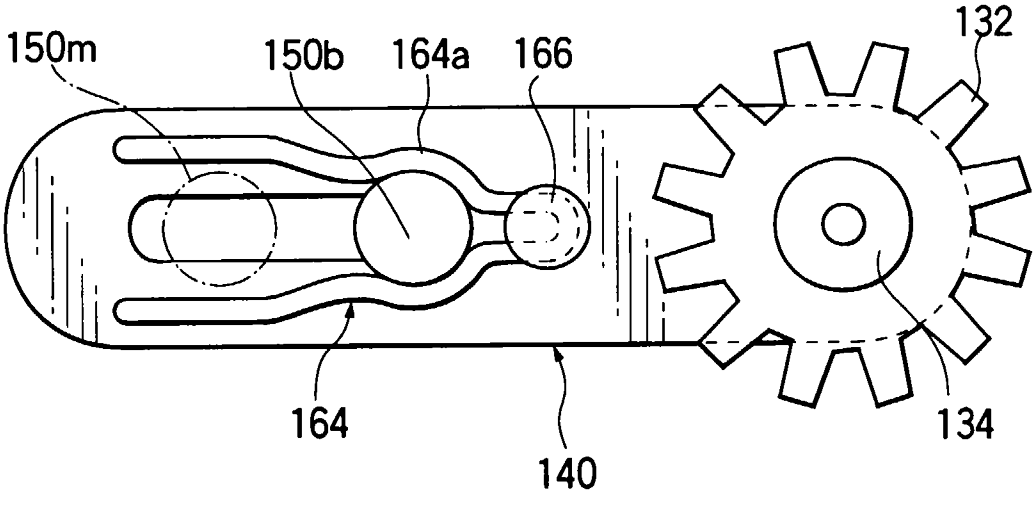
150m
150b
164a
166
132
164
140
134

FIG. 7

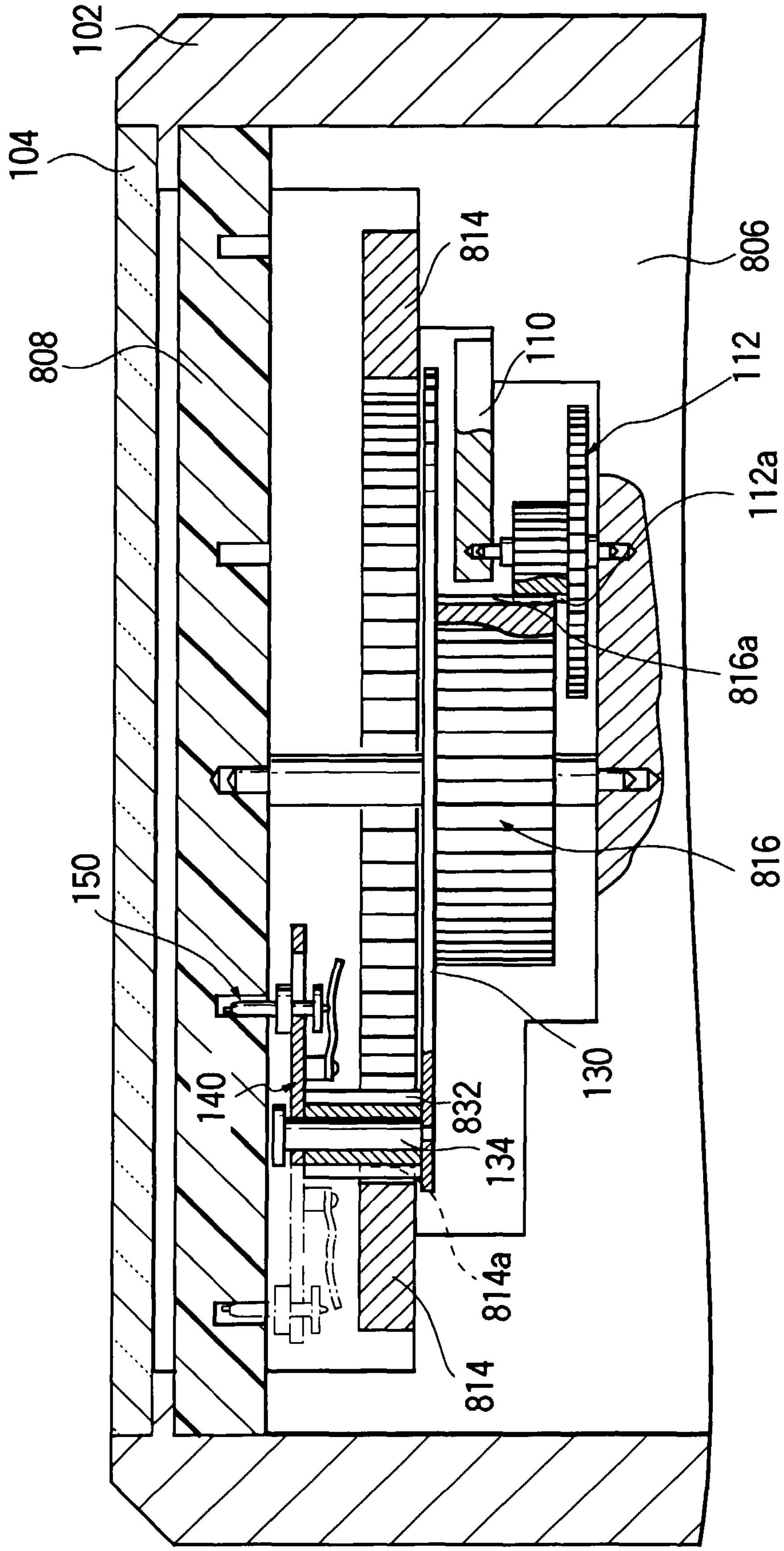
102
104
808
814
806
110
112
112a
816a
816
150
140
832
134
130
814a
814

FIG. 8

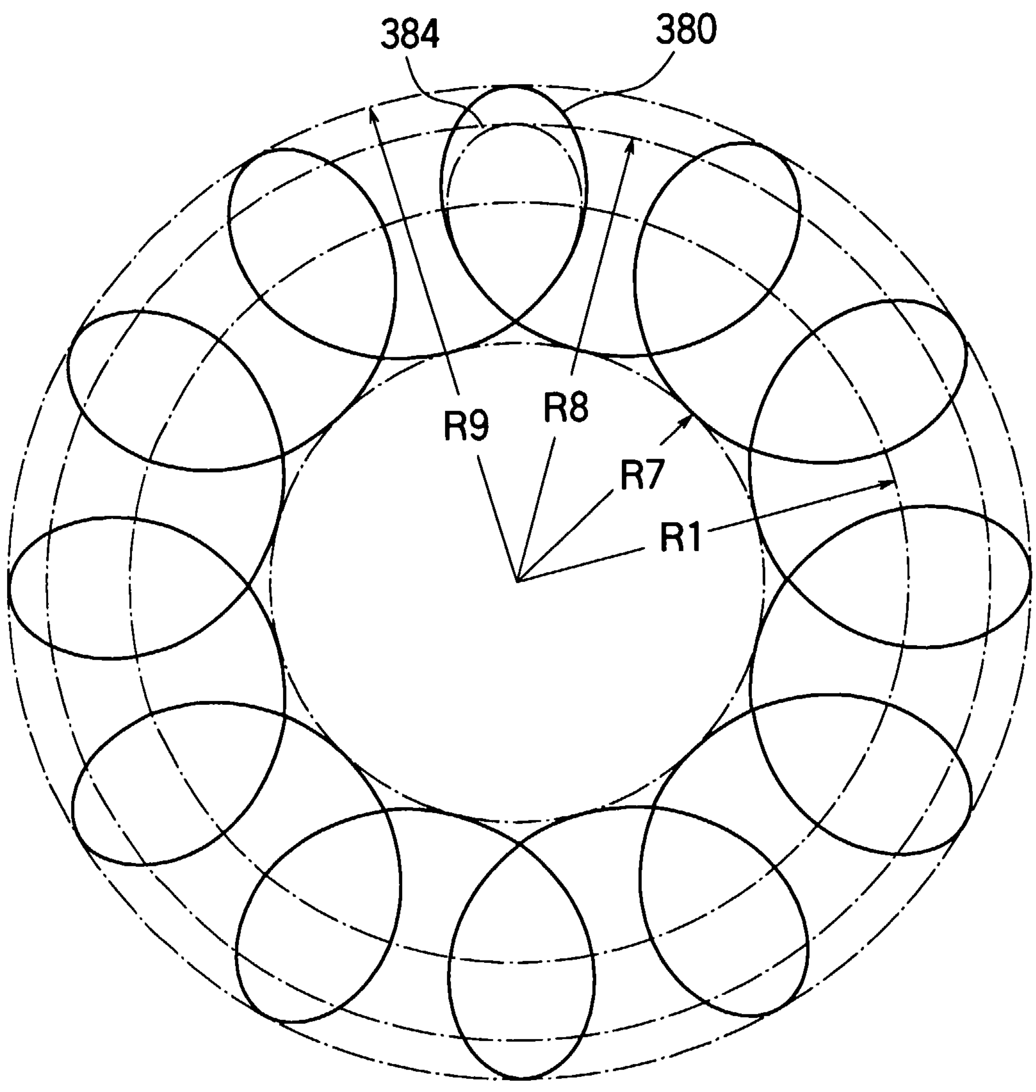

FIG. 9

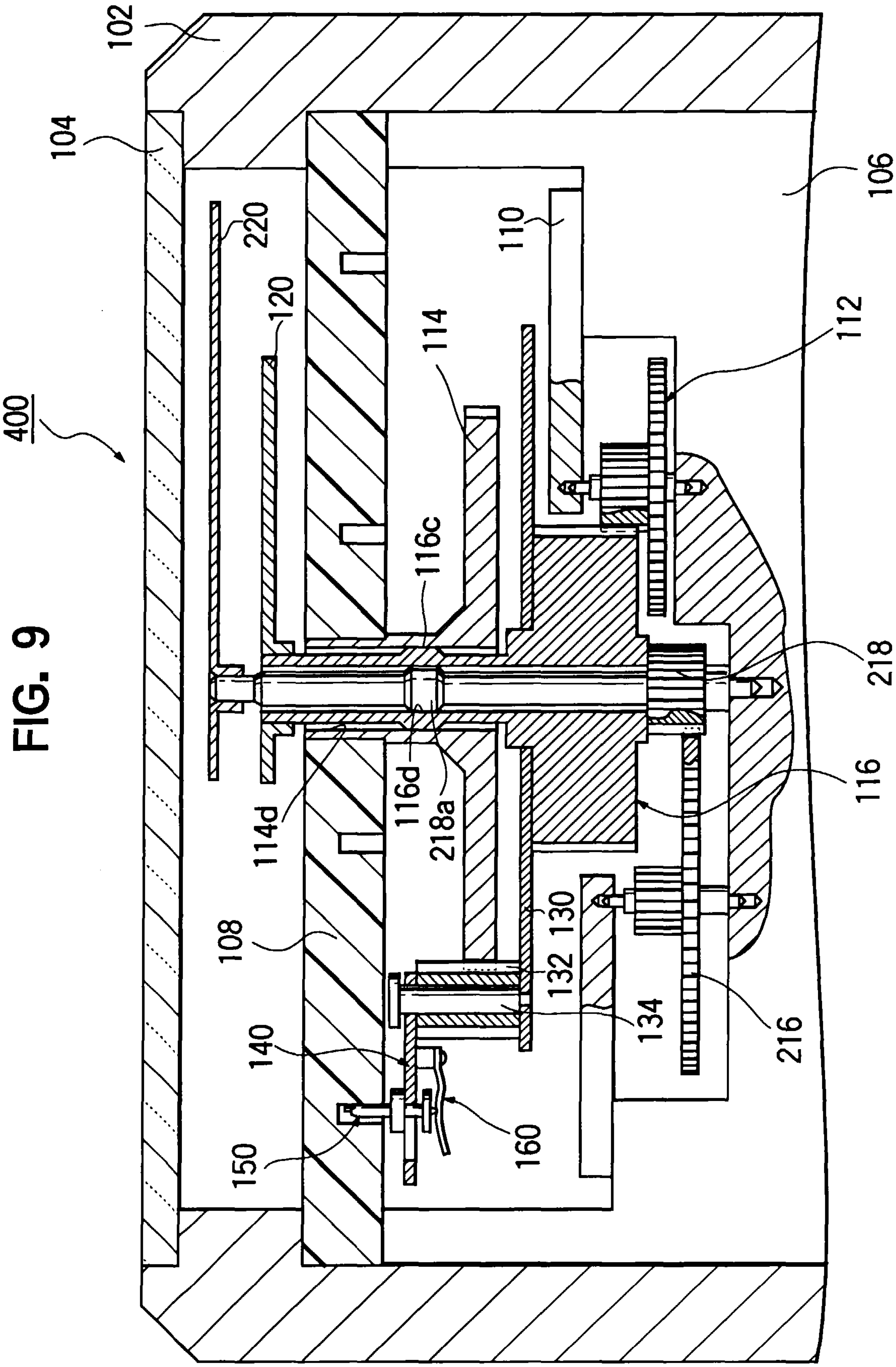
400
102
104
106
220
120
110
114
112
116c
218
116
114d
116d
218a
108
130
132
134
216
140
160
150

FIG. 10

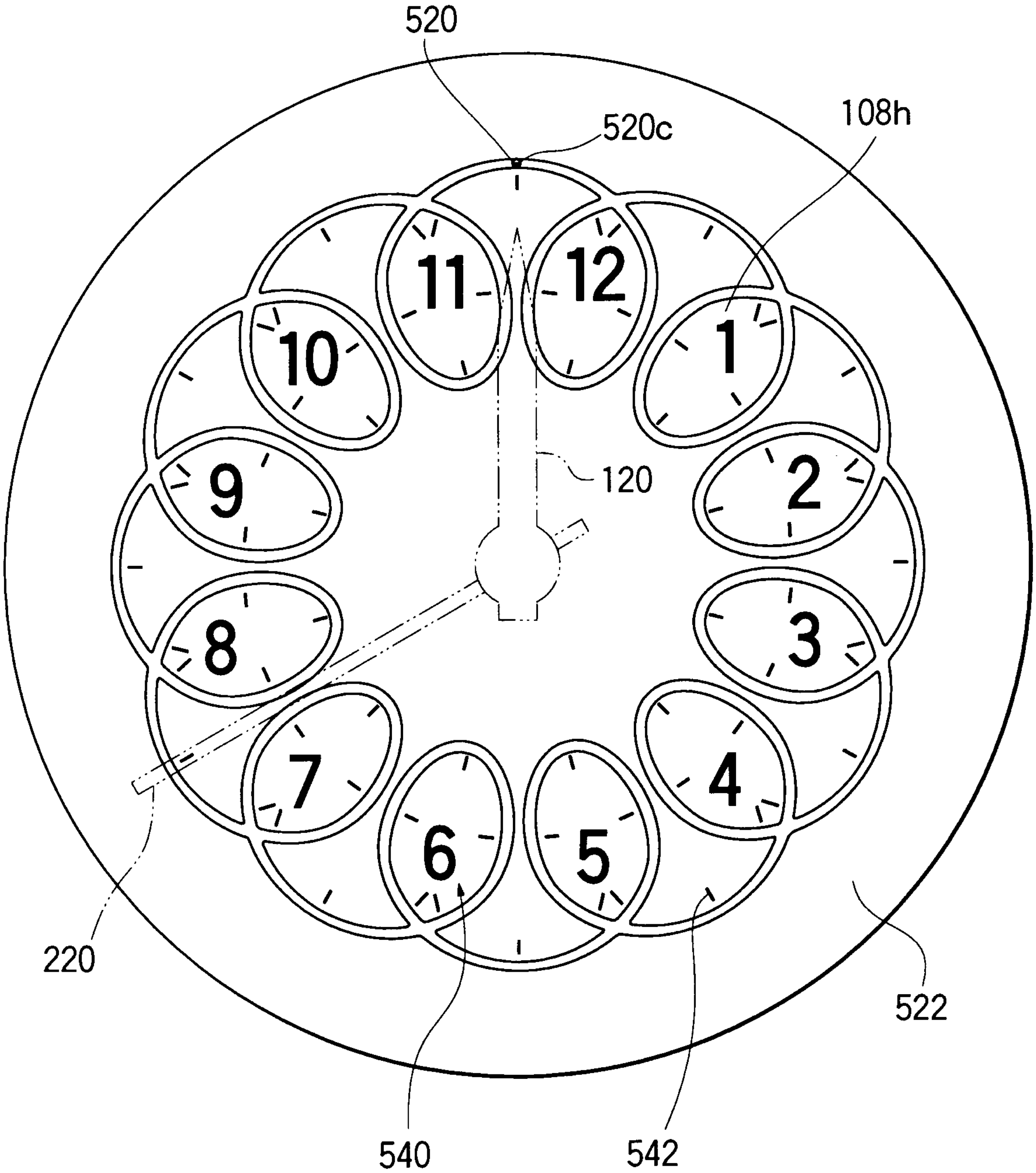

FIG. 11

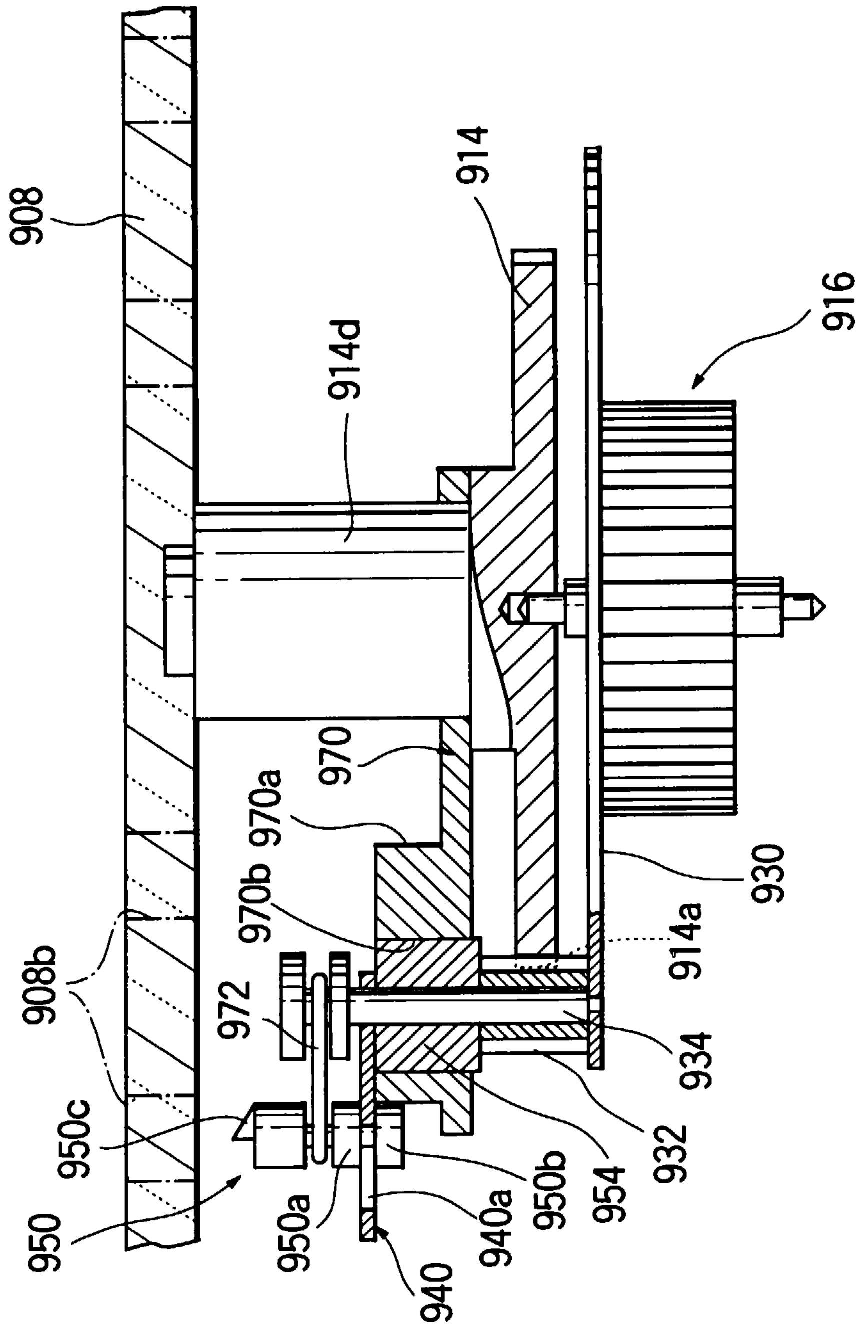
908
914
914d
916
970
970a
970b
908b
972
950c
950
950a
940a
950b
954
932
934
914a
930
940

FIG. 12

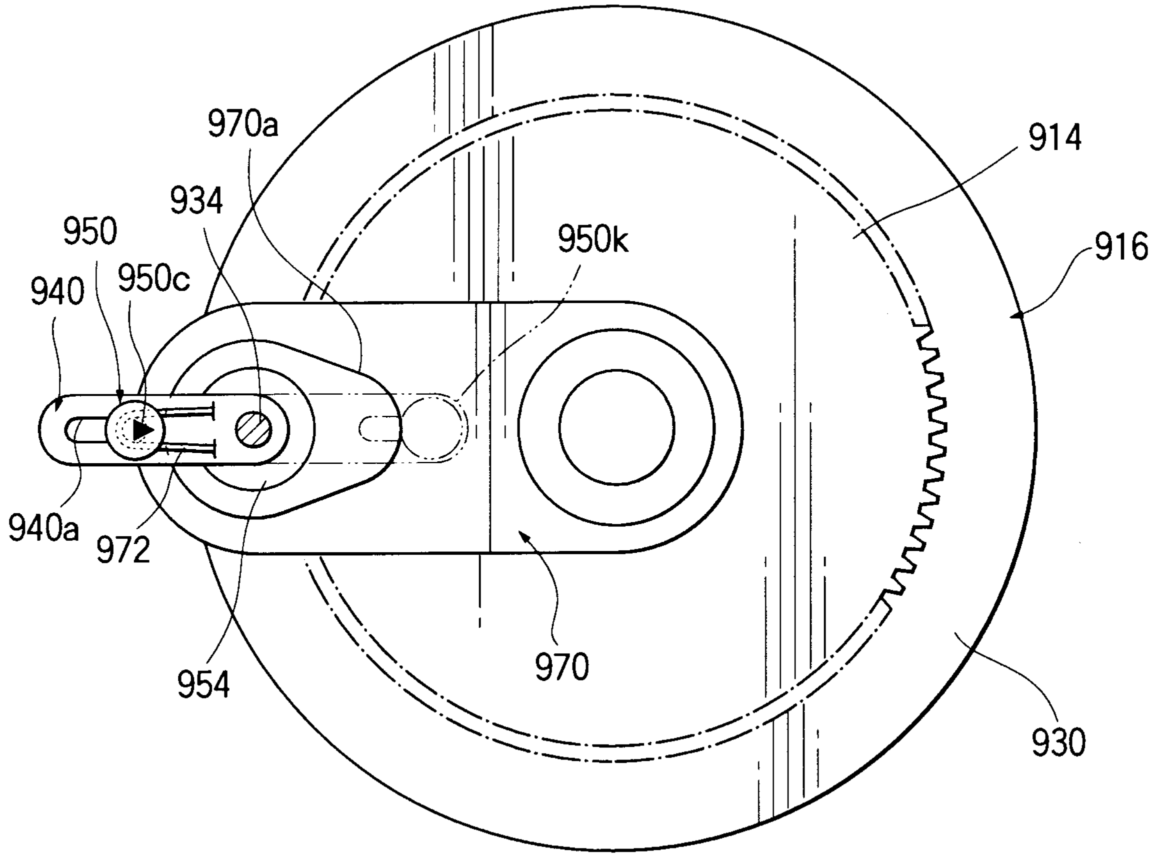

FIG. 13

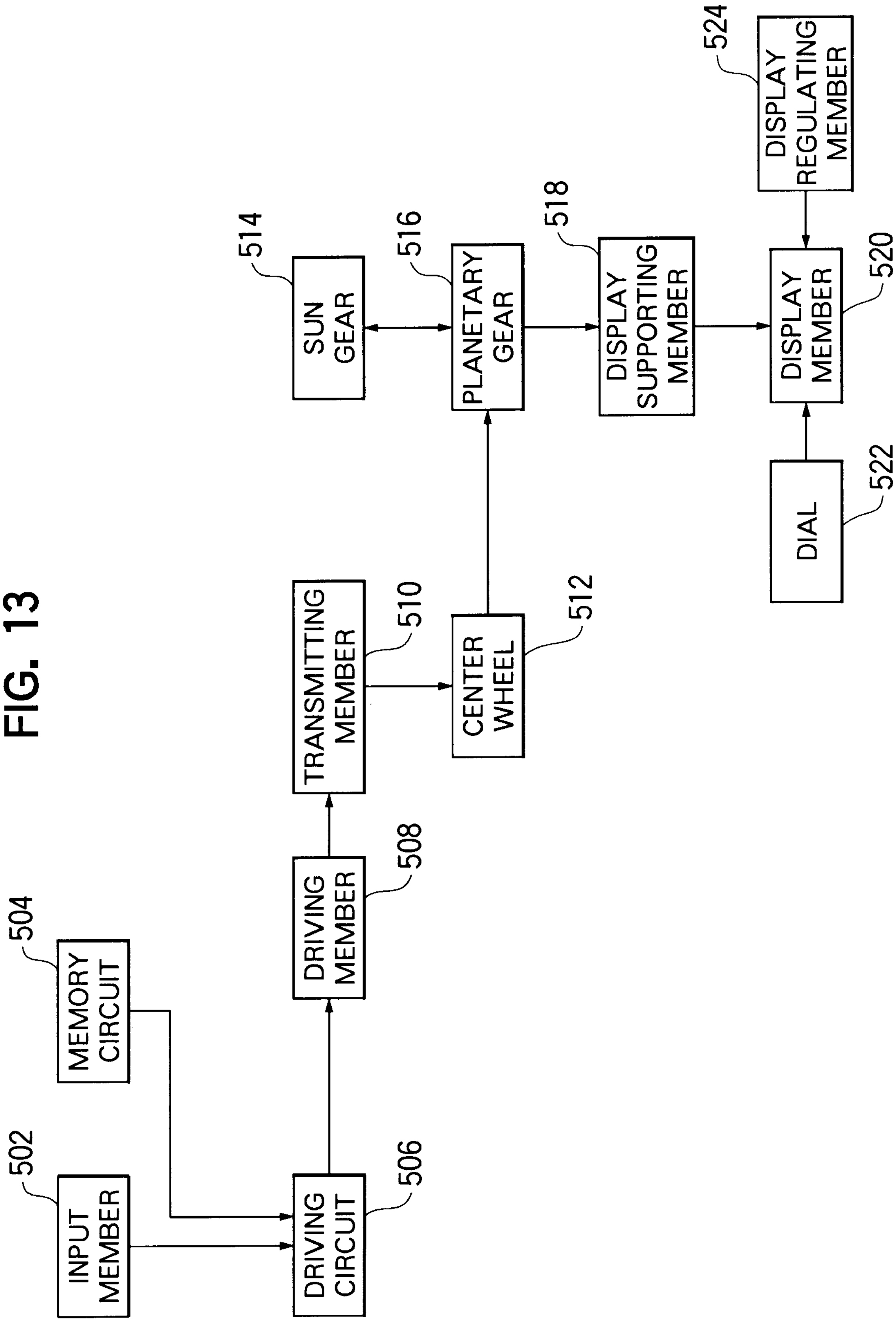
INPUT MEMBER
502
MEMORY CIRCUIT
504
DRIVING CIRCUIT
506
DRIVING MEMBER
508
TRANSMITTING MEMBER
510
CENTER WHEEL
512
SUN GEAR
514
PLANETARY GEAR
516
DISPLAY SUPPORTING MEMBER
518
DISPLAY MEMBER
520
DIAL
522
DISPLAY REGULATING MEMBER
524

FIG. 14

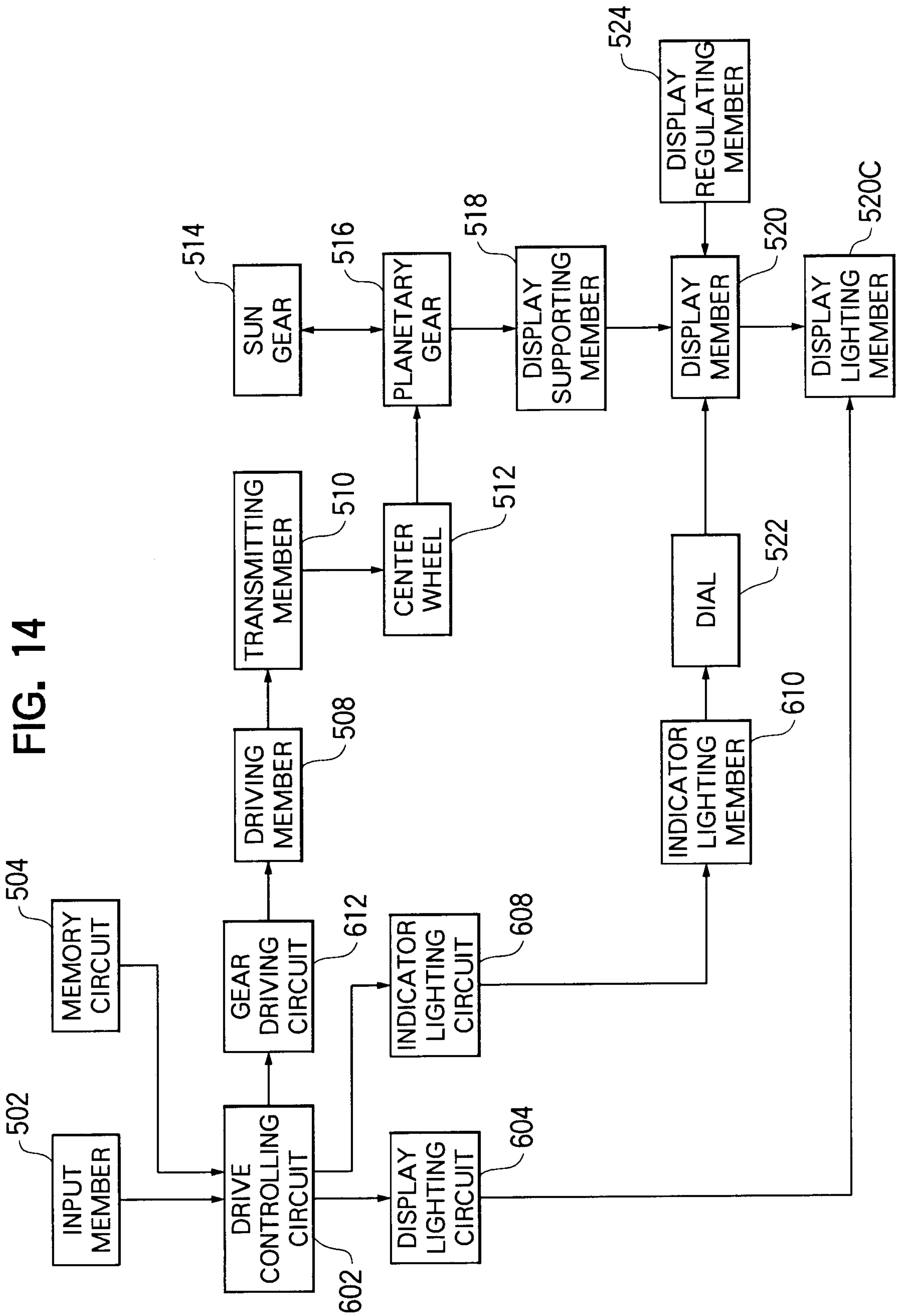
INPUT MEMBER
502
MEMORY CIRCUIT
504
DRIVE CONTROLLING CIRCUIT
602
GEAR DRIVING CIRCUIT
612
DRIVING MEMBER
508
TRANSMITTING MEMBER
510
CENTER WHEEL
512
SUN GEAR
514
PLANETARY GEAR
516
DISPLAY SUPPORTING MEMBER
518
DISPLAY MEMBER
520
DISPLAY REGULATING MEMBER
524
DISPLAY LIGHTING MEMBER
520C
DISPLAY LIGHTING CIRCUIT
604
INDICATOR LIGHTING CIRCUIT
608
INDICATOR LIGHTING MEMBER
610
DIAL
522

FIG. 15

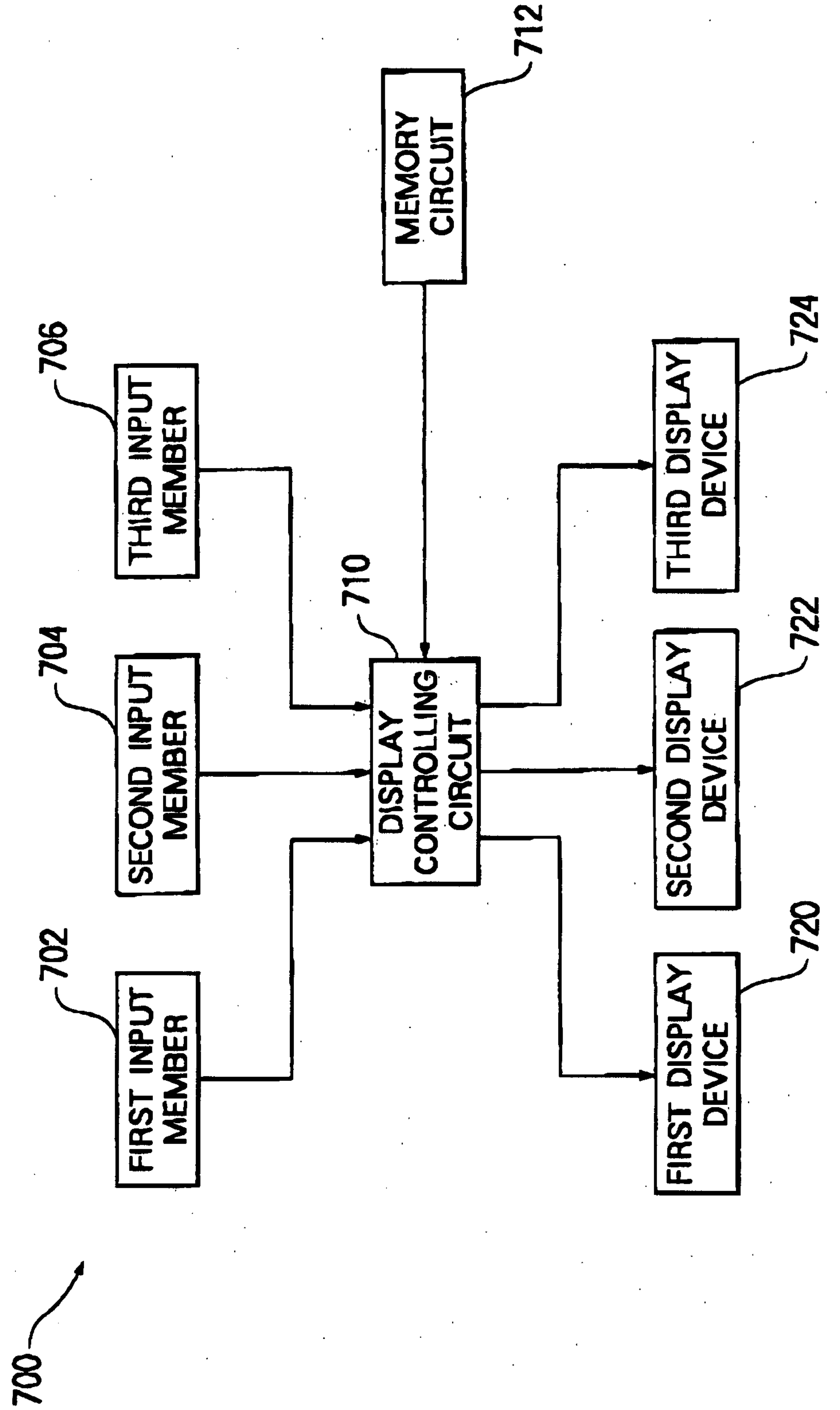
700
702
FIRST INPUT MEMBER
704
SECOND INPUT MEMBER
706
THIRD INPUT MEMBER
710
DISPLAY CONTROLLING CIRCUIT
712
MEMORY CIRCUIT
720
FIRST DISPLAY DEVICE
722
SECOND DISPLAY DEVICE
724
THIRD DISPLAY DEVICE

FIG. 16

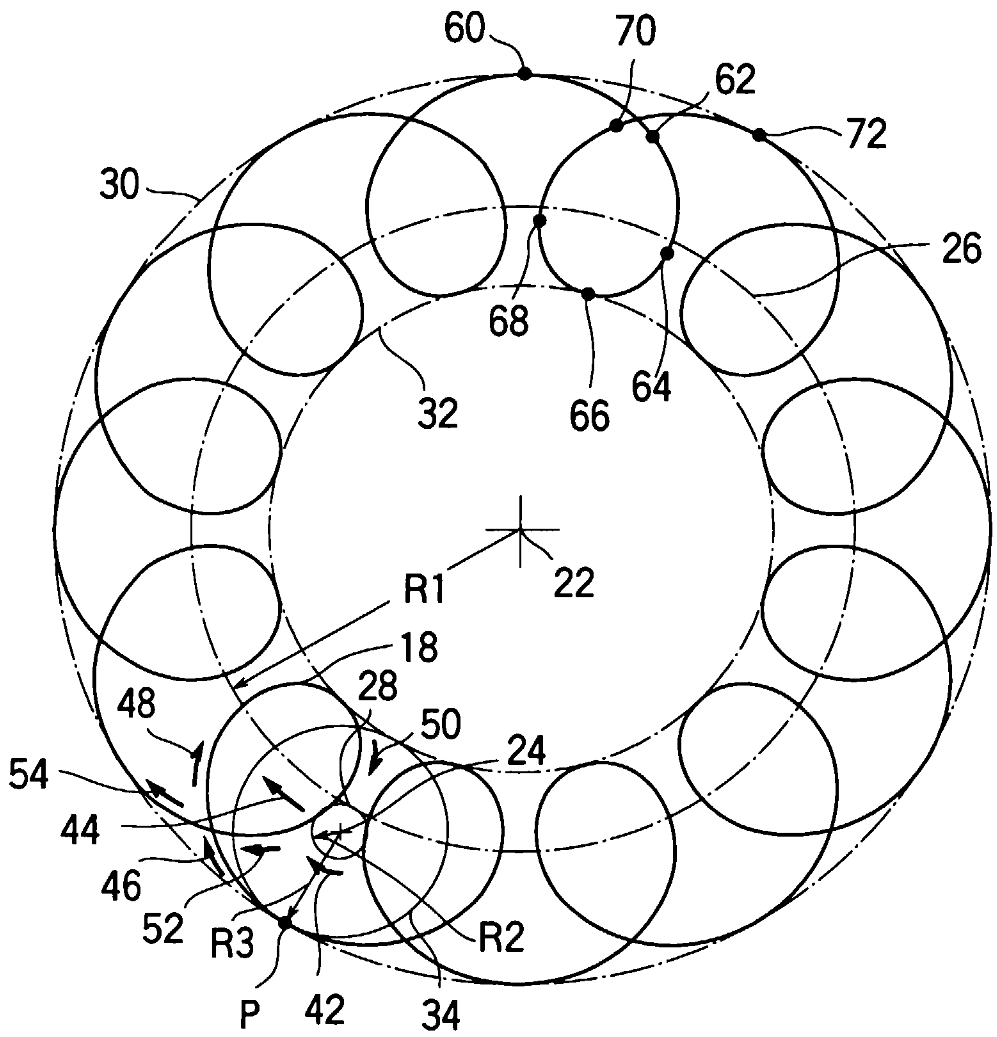
60
70
62
72
30
26
68
66
64
32
22
R1
18
28
48
50
24
54
44
46
52
R3
R2
P
42
34

**INTERNATIONAL SEARCH REPORT**

International application No.
PCT/JP95/02610

**A. CLASSIFICATION OF SUBJECT MATTER**

Int. Cl$^6$ G04B19/02, G01D7/00, 302, G09F11/00

According to International Patent Classification (IPC) or to both national classification and IPC

**B. FIELDS SEARCHED**

Minimum documentation searched (classification system followed by classification symbols)

Int. Cl$^6$ G04B19/00-19/02, G04B45/00

Documentation searched other than minimum documentation to the extent that such documents are included in the fields searched

| | |
|---|---|
| Jitsuyo Shinan Koho | 1947 - 1996 |
| Kokai Jitsuyo Shinan Koho | 1971 - 1996 |
| Toroku Jitsuyo Shinan Koho | 1994 - 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 52-117162, A (Ryuichi Kuronuma), October 1, 1977 (01. 10. 77), Lines 4 to 10, left column, page 1 (Family: none) | 1 - 3 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| February 19, 1996 (19. 02. 96) | March 19, 1996 (19. 03. 96) |
| Name and mailing address of the ISA/ Japanese Patent Office | Authorized officer |
| Facsimile No. | Telephone No. |

Form PCT/ISA/210 (second sheet) (July 1992)